# EUROPÄISCHE PATENTSCHRIFT

(11) **EP 2 835 931 B1**
(45) Veröffentlichungstag und Bekanntmachung des Hinweises auf die Patenterteilung: **08.04.2020**
(21) Anmeldenummer: 14179806.6
(22) Anmeldetag: 05.08.2014
(51) Int. Cl.: H04L 9/06, H04L 9/16

(54) **Verfahren zur Verschlüsselung von Zeichenketten**
Method for encryption of character strings
Procédé de codage de chaînes de signes

(30) Priorität: 05.08.2013 DE 102013108424
(43) Veröffentlichungstag der Anmeldung: 11.02.2015
(73) Patentinhaber: Deutsche Telekom AG, 53113 Bonn (DE)
(72) Erfinder: Kroder, Jens, 53639 Königswinter (DE); Kellermann, Benjamin, 01217 Dresden (DE)
(74) Vertreter: Braun-Dullaeus Pannen Emmerling Patent- & Rechtsanwaltspartnerschaft mbB

(56) Entgegenhaltungen:
- EP-A2- 0 759 669
- US-A1- 2006 171 534
- "Substitution cipher", INTERNET CITATION, 16. April 2005 (2005-04-16), XP002426651, Gefunden im Internet: URL:http://web.archive.org/web/20050716083 910/http://en.wikipedia.org/wiki/Substitut ion_cipher [gefunden am 2007-03-22]

## Beschreibung

Die Erfindung betrifft ein Verfahren zur Verschlüsselung von Zeichenketten, insbesondere zum Zwecke der Pseudonymisierung.

Zur Pseudonymisierung von insbesondere großen Datenmengen, z.B. zur Gewährleistung und Umsetzung der gesetzlichen Anforderungen des Datenschutzes, besteht ein großer Bedarf an Systemen, die diese Pseudonymisierung automatisiert und hinreichend sicher vornehmen können. Der Begriff der Sicherheit ist dahingehend zu verstehen, dass eine Rückübersetzung bzw. Rückzuordnung der pseudonymisierten Daten zu den ursprünglichen Daten für eine nicht befugte Person nicht oder nur unter unverhältnismäßig hohem Aufwand möglich ist.

Eine Anforderung an solche Systeme ist, dass die zugrundeliegenden Verfahren auch auf einer Vielzahl von Plattformen implementierbar sein sollen und hinreichend performant sein müssen.

Darüber hinaus gibt es in der Regel diverse fachseitige Anforderungen an verschlüsselte bzw. pseudonymisierte Daten. Insbesondere bei der Pseudonymisierung von Datenbankeinträgen ergeben sich folgende vier wesentlichen Anforderungen, nämlich die Alphabeterhaltung, die Längenerhaltung, die Eindeutigkeit (deterministisch) und die Kollisionsfreiheit.

Diese Anforderungen sind teilweise aufgrund konkreter Anwendungszwecke zwingend zu erfüllen. So können beispielsweise aufgrund von Schnittstellen- oder Datenbankvereinbarungen Längen- und Zeichensatzbegrenzungen einzuhalten sein. Alternativ können auch von nachgelagerten Systemen die Einhaltung von bestimmten Formaten und Syntaxen gefordert sein.

Moderne kryptografische Systeme zur Verschlüsselung sowie einige Hash-Verfahren besitzen teilweise die geforderten Sicherheitseigenschaften sowie eine hinreichende Performanz und sind darüber hinaus auf den verschiedensten Plattformen verfügbar. Jedoch scheiden sie häufig als Pseudonymisierungsverfahren aus, da zumindest eine der vier oben genannten Eigenschaften nicht erfüllt werden kann. Dies begründet sich darin, dass diese in der Regel binär abbilden und häufig blockbasiert (siehe Tabelle 1) arbeiten. Die nachfolgende Tabelle 1 verdeutlicht dies anhand einer Gegenüberstellung der zu pseudonymisierenden Zeichenkette und der entsprechenden verschlüsselten Zeichenkette, jeweils pseudonymisiert nach dem Standard SHA-1, AES-128 oder einer Alphabet-Chiffre.

**Tabelle 1: Gegenüberstellung unterschiedlicher kryptografische Systeme**

| Orginaldatum | SHA-1 | AES-128 | Alphabet-Chiffre |
|---|---|---|---|
| Wimar Straße 53b | °;ûa++ ÈH=w°jVÚ± _" | 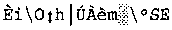 | Thwoi Tpefcd 97a |
| 53125 Bonn | E┤ 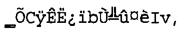 | « 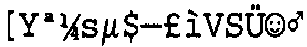 | 43862 Kheu |
| +49(0)228/1234567 | 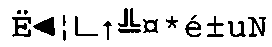 _{▪}g(C²O ¶ | 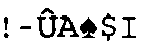 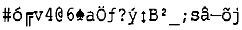 | +31(0)456/8710543 |

Es lässt sich erkennen, dass der SHA-1 und der AES-128 weder längenerhaltend noch alphabeterhaltend arbeiten. Die klassische Alphabetchiffren (z.B. Enigma, SIGABA sowie jegliche Form der Substitutionschiffren etc.) können zwar die vier genannten Eigenschaften gleichzeitig erfüllen, bieten jedoch aus heutiger Sicht keinen nennenswerten Schutz gegen unbefugte Entschlüsselung. Diese Schwäche wird insbesondere dadurch verschärft, dass für die Bildung aller verschlüsselten Zeichen stets derselbe Schlüssel verwendet wird.

Längenerhaltende Verfahren können durch Stromchiffren realisiert werden, die in der Regel auf der internen Verwendung von (pseudo) One-Time-Pads basieren. Sie lassen sich gewöhnlich mittels entsprechender Blockmodi (z.B. den Output Feedback Mode OFB) aus Blockchiffren realisieren. One-Time-Pads können die Sicherheit jedoch nur dann aufrechterhalten, wenn sie maximal einmal angewendet werden, da bereits die Kenntnis eines einzigen Datums (z.B. Zeichensatz, Datenbankeintrag) und seines dazugehörigen Pseudonyms ausreicht, um zur sofortigen trivialen Umkehrung aller Pseudonyme zu führen. Aufgrund der Anforderung nach Eindeutigkeit und Kollisionsfreiheit ist dies jedoch bei der Nutzung zur Pseudonymisierung nicht gewährleistbar.

Eine mögliche Lösung stellt hier der von Prof. Andreas Pfitzmann in den 90er Jahren vorgestellte Output-Cipher-Feedback Modus (OCFB) dar. Dieser verändert das intern verwendete One-Time-Pad in Abhängigkeit vom Eingangstext. Die triviale Invertierbarkeit ist hierdurch auch bei Kenntnis eines Datums und seines dazugehörigen Pseudonyms nicht mehr sofort gegeben. Allerdings besitzt dieses Verfahren Schwächen hinsichtlich seines Diffusionsverhaltens. So werden gleiche Wortanfänge immer in gleiche Pseudonymanfänge abgebildet. (s. Tabelle 2)

**Tabelle 2: Diffusionsschwäche beim OCFB Modus. Gleiche Wortanfänge werden in gleiche Pseudonymanfänge überführt. Darüber hinaus resultiert die Abbildung der ersten Differenz lediglich in eine Verschiebung. So ist der Abstand zwischen "i" und "y" genauso groß wie der zwischen "g" und "w".**

| Datum | Pseudonym |
|---|---|
| **Me**ier | **Kl**ght |
| **Me**yer | **Kl**wnq |

Eine weitere gängige Vorgehensweise zur Pseudonymisierung kann mittels sehr großer Zuordnungstabellen erfolgen. Diese weisen jeder Zeichenkette einen pseudozufällig gewählten Wert fest zu. Daher sind hierfür riesige Datenmengen erforderlich, welche in diesem Sinne als schwer verwaltbarer Schlüssel zu verstehen sind. Neben der Tatsache, dass die Permutation für die pseudozufälligen Zuordnungstabellen explizit in ausreichender Güte vorher festzulegen ist, hat diese Zuordnung insbesondere für den dezentralen Betrieb für alle möglichen Eingangsdaten zu erfolgen.

Da diese Anforderungen im Bereich der Anonymisierung häufig vorkommen, werden in der Regel Lösungen implementiert, die erhebliche Schwächen aufweisen und sich trivial rückwärts zuordnen lassen.

Die EP 0 759 669 A2 offenbart ein Verfahren zum Verschlüsseln von Zeichenketten mithilfe eines rotierenden Zustandsvektors. Dabei erfolgt ein mehrfaches "Weiterdrehen" des Zustandsvektors wobei vorangehende Zeichen der Zeichenkette in Abhängigkeit der nachfolgenden Zeichen der Zeichenkette und umgekehrt verschlüsselt werden. Der Zustandsvektors wird um einen zu ermittelnden Wert weitergedreht. Dieser Wert ist allerdings in statischen Zuordnungstabellen hinterlegt, was Defizite hinsichtlich der Sicherheit bedingt.

Es ist somit Aufgabe der vorliegenden Erfindung ein Verfahren zur Verschlüsselung von Zeichenketten bereitzustellen, das insbesondere den oben angesprochenen Anforderungen genüge leistet, bzw. die genannten Nachteile weitgehend ausräumt und eine verbesserte Sicherheit aufweist.

Die der Erfindung zugrunde liegende Aufgabe wird gelöst durch ein Verfahren nach Ansprüchen 1 und 6 sowie eine Vorrichtung zur Durchführung eines solchen Verfahrens nach Anspruch 7 bevorzugte Ausgestaltungen ergeben sich aus den Unteransprüchen.

Der Kern der Erfindung liegt insbesondere darin, dass in zumindest zwei Änderungsdurchläufen die ursprüngliche Zeichenkette geändert wird. In einem ersten Änderungsdurchlauf wird also die ursprüngliche Zeichenkette in eine erste geänderte Zeichenkette geändert; in einem zweiten Änderungsdurchlauf wird die erste geänderte Zeichenkette in eine zweite geänderte Zeichenkette abgeändert. Es kann darüber hinaus noch ein dritter und vierter usw. Änderungsdurchlauf durchgeführt werden. Durch die Änderung der Reihenfolge, in der die Zeichen der Zeichenkette in den jeweiligen Änderungsdurchläufen nun abgeändert werden, kann sichergestellt werden, dass ein hohes Maß an Diffusion erreicht wird. Unter Diffusion wird im Wesentlichen verstanden, dass eine recht geringe Variation an der ursprünglich zu ändernden Zeichenkette eine recht große Wirkung auf die geänderte Zeichenkette nach der Verschlüsselung bewirkt. Zwei Zeichenketten, die also nahezu identisch sind und beispielsweise nur an einer einzigen Stelle eine Variation zueinander aufweisen, werden in Rahmen des Verschlüsselungsverfahrens derart unterschiedlich zueinander verändert, so dass im besten Falle sämtliche der Stellen der geänderten Zeichenketten zueinander verschieden sind. Rückschlüsse auf den Verschlüsselungsalgorithmus anhand einer Untersuchung der geänderten Zeichenketten sind dann unmöglich.

Dabei ist es besonders vorteilhaft, wenn das erste Zeichen, das im zweiten Änderungsdurchlauf zuerst geändert wird, nicht an derselben Position der Zeichenkette ist, die auch im ersten Durchlauf zuerst geändert wurde. Dies hat den Vorteil, dass sich die Diffusion in jedem Falle auch auf das zuerst zu ändernde Zeichen der Zeichenkette ausbreiten kann.

Der besondere Vorteil liegt darin, dass auf diese Weise ein Verschlüsselungsalgorithmus realisierbar ist, der ein hohes Maß an Sicherheit bietet und dabei längenerhaltend und alphabeterhaltend arbeiten kann. Dafür wird im Wesentlichen jedes Zeichen der ursprünglichen Zeichenkette an seiner Position in der Reihe in ein geändertes Zeichen abgeändert. Werden dann alle Zeichen der Zeichenkette nacheinander in geänderte Zeichen abgeändert, so wird eine neue nämlich geänderte Zeichenkette erzeugt, die dieselbe Anzahl an Zeichen umfasst wie die ursprüngliche Zeichenkette. Da ferner die ursprünglichen Zeichen lediglich in Ihrer Ordnungszahl geändert werden und damit das ursprüngliche Zeichen also nur in seinem eigenen Alphabet geändert wird, arbeitet dieser Algorithmus auch alphabeterhaltend.

Das Verändern der Zeichenkette erfolgt also durch schrittweises Ändern jeder Zeichen der Zeichenkette nacheinander. Die Zeichen werden allerdings mehrfach geändert, wobei die vorherigen Änderungsschritte jeweils einen Einfluss auf die nachfolgenden Änderungsschritte haben. Jeder Änderungsschritt für jedes Zeichen wird im Wesentlichen initiiert durch den Änderungswert. Der Änderungswert gibt an, um wie viel die Ordnungszahl des jeweiligen Zeichens erhöht werden muss, um zum entsprechenden geänderte Zeichen zu gelangen. Das Weiterdrehen bedeutet damit im Wesentlichen das Weiterzählen der Ordnungszahl innerhalb des Zeichensatzes, aus dem das Zeichen entnommen ist. Dafür ist in dem Zeichensatz zu jedem möglichen Zeichen eine eindeutige Ordnungszahl vergeben, anhand derer das Zeichen identifiziert werden kann.

Im Gegensatz zum Verfahren nach der EP 759 669 A2 wird der Ausgangswert, der von der kryptographischen Einheit erzeugt wird, anhand des AES-Algorithmus (Advanced Encryption Standard) erzeugt.

Vorzugsweise wird der Änderungswert auf "geheime" Weise erzeugt, insbesondere anhand eines separaten Verschlüsselungsalgorithmus. Beispielsweise kann anhand eines Schlüssels ein initiales Eingangswort vorgegeben sein, welches dann durch einen Verschlüsselungsalgorithmus verändert wird. Hiermit ergibt sich eine reproduzierbare Änderung des Eingangswortes; diese Reproduzierbarkeit erfordert allerdings eine Kenntnis über den Schlüssel, der dieser Verschlüsselung zugrunde liegt. Das Ausgangswort wiederum kann auf beliebige Art und Weise Eingang finden in die Erzeugung des Änderungswertes. Hierzu bietet es sich zum Beispiel an, eine Bit-Schablone auf das Ausgangswort zu legen, und die Bits an bestimmten Positionen des Ausgangswortes herauszufiltern. Die herausgefilterten Bits ergeben dann den neuen Änderungswert, der für die nachfolgenden Änderungen herangezogen wird.

Um eine erhöhte Diffusion zu erzeugen wird die Erzeugung des Änderungswertes, insbesondere die Erzeugung des Ausgangswertes in Abhängigkeit gebracht zu einer zuvor durchgeführten Änderung eines Zeichens. So kann beispielsweise das zuvor geänderte Zeichen Eingang finden in eine Änderung des Eingangswortes, für eine nachfolgende Erzeugung eines Ausgangswortes und/oder für eine nachfolgende Erzeugung eines Änderungswertes. Die einzelnen Änderungsdurchläufe können somit nach dem OCFB-Modus ablaufen.

In einer besonders bevorzugten Anwendung wird dieses Verfahren zur Pseudonymisierung eines Datenfeldes einer Datenbank verwendet. Dabei wird zunächst der Inhalt des Datenfeldes ausgelesen. Der Inhalt wird dann verschlüsselt. Anschließend wird der Inhalt des ausgelesenen Datenfeldes durch den verschlüsselten Inhalt ersetzt. Da hierbei die Datenfelder im wesentlichen ohne Änderung der Formatierung oder Speichergröße unverändert übernommen werden müssen, bietet sich das vorliegende Verfahren an, da insbesondere die Alphabeterhaltung und auch die Längenerhaltung bei zugleich hoher Diffusionsrate an allen Stellen gegeben ist. Der Inhalt eines Datenfeldes ist dann die zu verschlüsselnde Zeichenkette.

Die Erfindung wird anhand der Figuren nachfolgend näher erläutert. Hierin zeigt:
- Figur 1: schematisch eine Zeichenkette und ein dazugehöriger Zeichensatz;
- Figur 2: schematisch den Zustand einer Vorrichtung zur Durchführung des erfindungsgemäßen Verfahrens während der Pseudonymisierung;
- Figur 3: tabellarisch die Zeichenkette nach den verschiedenen Änderungsdurchläufen;
- Figur 4: schematisch den Zustand der Vorrichtung nach Figur 2 während der Entschlüsselung;
- Figur 5: schematisch eine alternative Zeichenkette und ein dazugehöriger alternativer Zeichensatz.

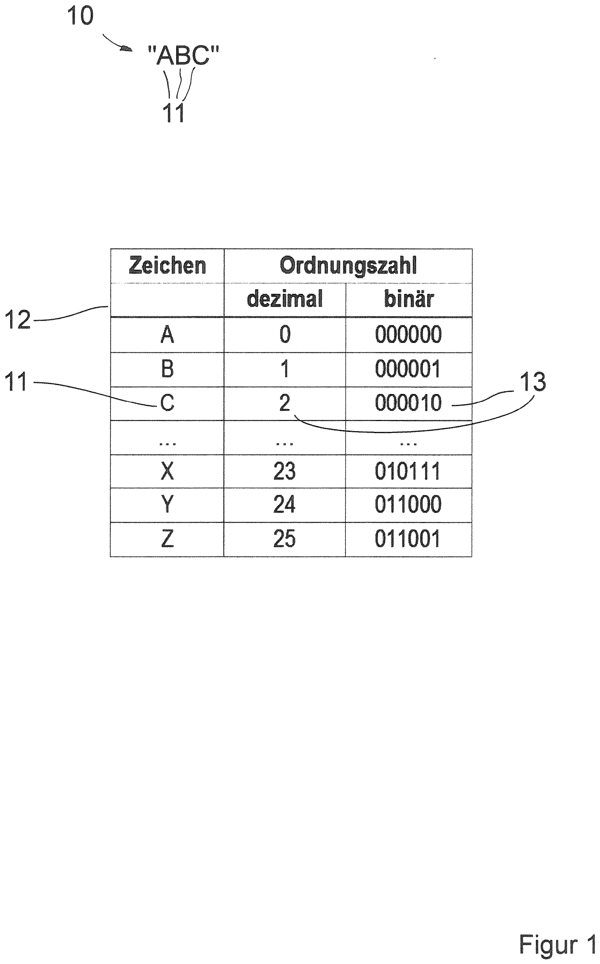

Anhand der Figur 1 werden zunächst einige erfindungswesentliche Begriffe erläutert. Es ist eine Zeichenkette 10 gezeigt, die aus den Großbuchstaben "ABC" gebildet ist. Die Großbuchstaben stellen für sich genommen jeweils ein Zeichen 11 dar. Die Zeichen sind allesamt Bestandteil des großen Alphabets, also das Alphabet der Großbuchstaben von "A" bis "Z". Dieses große Alphabet ist der definierte Zeichensatz 12, worin abschließend festlegt ist, aus welchen Zeichen 11 die Zeichenkette 10 gebildet sein kann. Im vorliegenden Fall weist der Zeichensatz zwar nur eine recht geringe Menge von Zeichen auf; es ist allerdings keine Grenze an die Gestalt der Zeichensätze gesetzt. So kann auch die ASCII-Codierung einen Zeichensatz definieren.

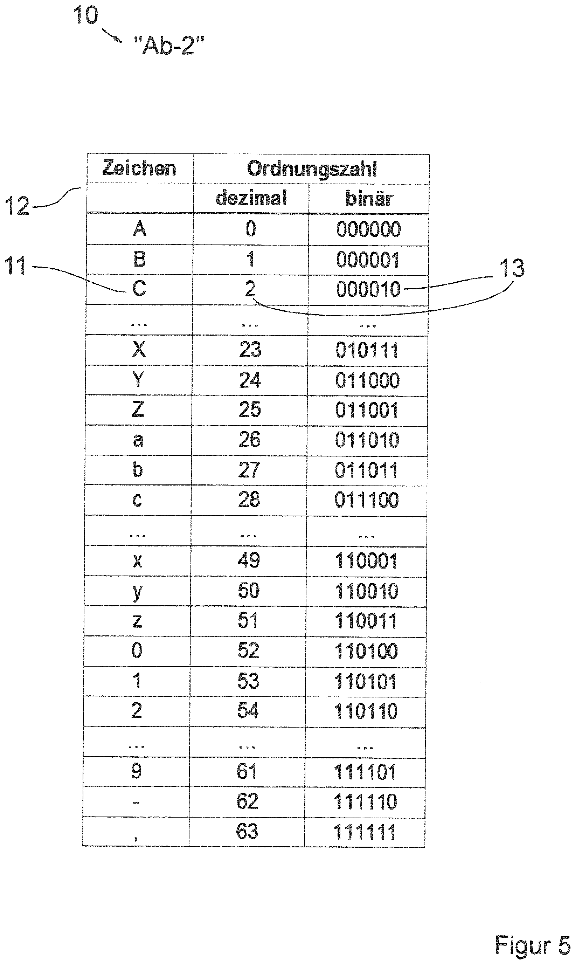

In Figur 5 ist ein alternativer Zeichensatz dargestellt, der neben den Großbuchstaben auch die Kleinbuchstaben des Alphabetes sowie die Ziffern von 0 bis 9 umfasst. Ferner sind Sonderzeichen wie Bindestrich und Komma vorhanden. Eine mögliche Zeichenkette 10 kann beispielsweise aus den Zeichen "Ab-2" bestehen.

Jedem Zeichen des Zeichensatzes ist eine eindeutige Ordnungszahl zugewiesen. Diese sind in den Spalten 2 und 3 der Tabelle nach den Figuren 1 und 5 angegeben. Dabei spielt es keine Rolle, ob die Ordnungszahl im Dezimal- oder Binärsystem angegeben ist. Zum Beispiel stellt in der ASCII-Zeichencodierung der 7-Bit-Code die Ordnungszahl bereit.

Es ist auch möglich, dass innerhalb einer Zeichenkette die unterschiedlichen Zeichen aus unterschiedlichen Zeichensätzen stammen. So kann beispielsweise festgelegt sein, dass ein erstes Zeichen lediglich aus Großbuchstaben gebildet sein darf, also beispielsweise eines Zeichensatzes, wie er in der Figur 1 gezeigt ist. Das zweite Zeichen der Zeichenkette kann aus einem vollständig anderen Zeichensatz gebildet sein, beispielsweise aus einem Zeichensatz, der nur Ziffern enthält. Alternativ können natürlich sämtliche andere möglichen, auch frei definierbaren Zeichensätze verwendet werden. Es könnte also jeder Stelle der Zeichenkette 10 individuell ein Zeichensatz 12 vorgegeben sein, aus dem das Zeichen 11 an dieser Stelle ausgewählt sein kann.

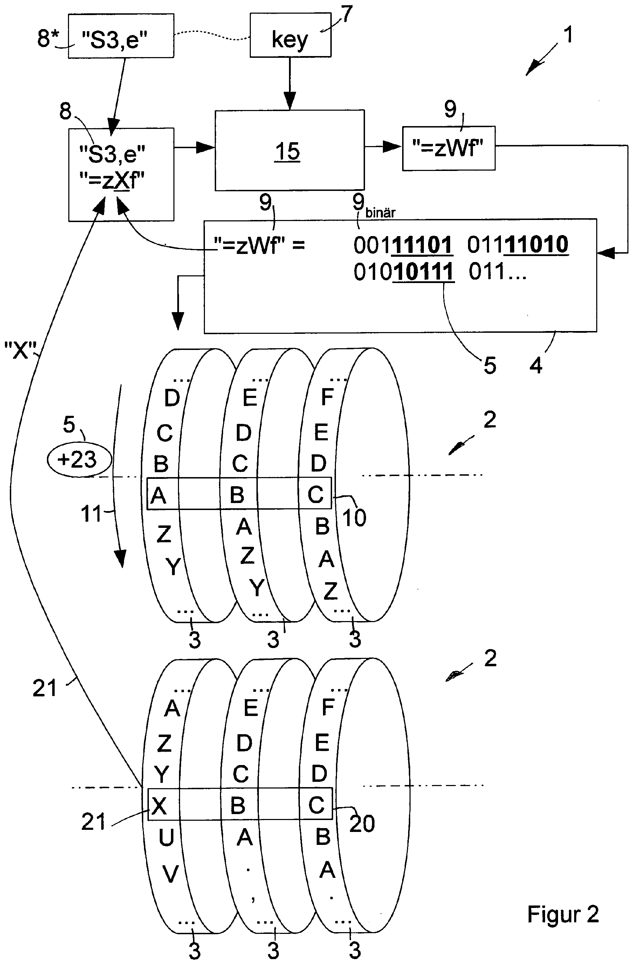

Figur 2 zeigt nun den Zustand einer Vorrichtung zur Pseudonymisierung von Zeichenketten, die für das erfindungsgemäße Verfahren verwendet wird. Eine solche Vorrichtung wurde bereits in den 90er Jahren von Prof. Andreas Pfitzmann, TU Dresden im Zusammenhang mit dem OCFB-Modus beschrieben. Kern der Vorrichtung ist ein Speicher 2, der mehrere Speichereinheiten 3 umfasst. Pro Speichereinheit 3 wird dabei genau ein Zeichen 11 der Zeichenkette 10 abgelegt. Innerhalb der Speichereinheit 2 wird die gesamte Zeichenkette 10 "ABC" abgelegt. Im vorliegenden Fall sind die Speichereinheiten jeweils aus Zeichenwalzen 3 gebildet, die an ihrer Oberfläche die Zeichen 11 abbilden. Durch Verdrehen der Walzen 3 in eine Richtung um einen bestimmten Wert kann das Zeichen 11, welches in dieser Speichereinheit 3 abgelegt ist, verändert werden. Ein Weiterdrehen um eine Umfangsposition mit dem Änderungswert "1" ändert dabei beispielsweise das Zeichen A auf das Zeichen B ab. Dies folgt der Gesetzmäßigkeit, dass die Ordnungszahl 13 um den jeweiligen Änderungswert 5 vergrößert also aufaddiert wird. Der Änderungswert 5 stellt somit eine Eingangsgröße für die jeweilige Speichereinheit dar, anhand derer das Zeichen um die jeweilige Änderung in der Ordnungszahl weitergedreht wird.

Im vorliegenden Fall ist das Zeichen 11 auf der ersten Walze 3 der Großbuchstabe A. Der Änderungswert 5 beträgt in diesem Fall "23". Anhand der Tabelle, die in Figur 1 gezeigt ist, ist ersichtlich, dass die Ordnungszahl 13 für den Buchstaben A die "0" ist; wird diese Ordnungszahl nun mit "23" addiert, erhält man die neue Ordnungszahl "23". Das der neuen Ordnungszahl zugeordnete Zeichen 11 ist das "X". Das Weiterdrehen der ersten Walze 3 um "23", also das Aufaddieren der Ordnungszahl um "23", ergibt folglich das "X" welches nun das geänderte erste Zeichen 21 darstellt.

In einem Änderungsdurchlauf werden im Folgenden auch sämtliche andere Zeichen der Zeichenkette, nämlich die anderen beiden Zeichen "B" und "C" entsprechend geändert, wobei für die Änderung der übrigen Zeichen ein anderer Änderungswert 5 verwendet wird, der zunächst noch bestimmt werden muss. Wie der Änderungswert 5 nun für jedes Zeichen der Zeichenkette 10 neu festgelegt wird, wird nachfolgend beschrieben.

Mit dem Bezugzeichen 15 ist eine kryptografische Einheit bezeichnet. Diese ändert ein Eingangswort 8 anhand eines Schlüssels 7 in ein Ausgangswort 9 um. Als Eingangswort 8 wird für die aller erste Zeichenänderung ein initiales Eingangswort 8* verwendet, welches beispielsweise Bestandteil auch des Schlüssels sein kann. Dieses initiale Eingangswort 8* umfasst im vorliegenden Fall die Zeichenkette "S3,e". Die kryptografische Einheit kann nun jegliche Methode verwenden, die eine Zeichenkette anhand des Schlüssels 7 verschlüsselt oder in sonstiger, nicht offensichtlich nachvollziehbarer Weise abändern kann. Das Ausgangswort 9 stellt nun eine Eingangsgröße für eine Ansteuereinheit 4 dar, die letztendlich den Änderungswert 5 an die Speichereinheit 2 ausgibt. Die Ansteuereinheit 4 entnimmt nun anhand eines vorgegebenen Algorithmus dem Ausgangswort 9 den Änderungswert 5. Dies kann durch einen nahezu beliebigen Algorithmus erfolgen, der die weiter unten genannten Anforderungen aber erfüllen sollte. Im vorliegenden Fall wird die Zeichenkette des Ausgangswortes 9 in deren Binärdarstellung 9_{binär} aufgelöst. Nun wird eine Bitmaske über die Binärdarstellung 9_{binär} des Ausgangswortes 9 gelegt, wodurch vorher festgelegte Stellen dieses Binärmusters herausgegriffen werden. Dies wurde einleitend mit Bezug auf Tabelle 2 bereits erläutert. Der Änderungswert ergibt sich aus der Bitfolge 10111 (entspricht 23 in Dezimaldarstellung)

Wie bereits ausgeführt ist dies lediglich nur ein Beispiel, wie aus dem Ausgangswort 9 ein Änderungswert 5 erzeugt werden kann. Hier sind ohne weiteres andere Möglichkeiten denkbar, welche die folgenden Anforderungen erfüllen sollen.

Es soll sich um einen deterministischen Prozess handeln, der aus dem Ausgangswort den Änderungswert ermittelt. Der Änderungswert soll dabei zumindest so groß sein, dass von jedem Zeichen der Zeichenkette durch eine entsprechende Aufaddierung der Ordnungszahlen anhand des Änderungswertes, jedes andere Zeichen des Zeichensatzes erreicht werden kann. Anders ausgedrückt: der erzeugbare Änderungswert soll zumindest so groß sein wie die Alphabetgröße, also im vorliegenden Fall die Anzahl der Umfangspositionen der Walze beziehungsweise die Anzahl der unterschiedlichen Zeichen in einem Zeichensatz. Die möglichen Änderungswerte sollen statistisch gleichverteilt sein bezogen auf die Anzahl der Zeichen in einem Zeichensatz.

Die kryptografische Einheit 15 führt eine Übergangsfunktion aus, anhand derer das Eingangswort 8 in das Ausgangswort 9 überführt wird. Die Stärke der Übergangsfunktion ist die Eigenschaft, die in dem Verfahren an die nachfolgende Chiffrierung vererbt wird. Je schwieriger es also ist, die Arbeitsweise der Übergangsfunktion nachzuvollziehen, desto schwieriger ist es, die Änderung des Zeichens 11 nachzuvollziehen. Die Übergangsfunktion sollte die folgenden Eigenschaften besitzen:
- die Anzahl der einnehmbaren Werte des Eingangs- und des Ausgangswortes sollen größer sein als die maximal bearbeitete Alphabetgröße. Unter der Alphabetgröße ist die Anzahl von Zeichen in einem Zeichensatz gemeint.
- Die Abbildung des Eingangswortes auf das Ausgangswort sollte nicht trivial sein.
- Die Abbildung sollte von einem Geheimnis abhängen, nämlich insbesondere des Schlüssels beziehungsweise auch des geheimzuhaltenden initialen Eingangswortes.
- Die Ausgangswörter sollten keine statistischen Auffälligkeiten besitzen und in ihrer Gesamtheit nahezu gleich verteilt sein. Es eignen sich insbesondere Funktionen, die das Eingangswort quasi zufällig in das Ausgangswort überführen. "Quasi zufällig" ist dabei als "deterministisch und ohne weitere Kenntnis nicht vorhersagbar" zu verstehen. Das bedeutet, dass die Übergangsfunktionen von außen betrachtet eine Art Zufallsgenerator für das Ausgangswort und damit auch für den Änderungswert darstellt, allerdings mit der Maßgabe, dass dieser Zufallsgenerator reproduzierbar arbeitet. Ein identisches Eingangswort wird unter Verwendung des identischen Schlüssels folglich stets das selbe Ausgangswort und damit auch den selben Änderungswert ergeben. Es ist aber von außen betrachtet vollkommen unklar, wie basierend auf dem Eingangswort das Ausgangswort erzeugt wird. Als Übergangsfunktion, die von der kryptographischen Einheit 15 durchgeführt wird, wird im Rahmend der vorliegenden Erfindung ein AES-Algorithmus (Advanced Encryption Standard) herangezogen.

Um aus dem binären Ausgabe-Block des AES die Änderungswerte mit den oben genannten Eigenschaften zu erhalten, kann wie folgt vorgegangen werden.

Bis zum Erhalt eines gültigen Änderungswertes wird sukzessive ein pseudozufälliges Byte der Ausgabe entnommen und geprüft. Hierzu wird das entsprechende Byte in Abhängigkeit der Länge des zugrundeliegenden Alphabets mit der entsprechenden Bit-Maske (siehe Tabelle 4) UND-verknüpft. Anschließend wird das Ergebnis als Binärziffer interpretiert mit der Alphabetgröße verglichen. Ist dieser Wert (echt) kleiner als die Alphabetgröße, wird der Wert genutzt, ansonsten wird das Byte verworfen und der Vorgang mit dem nächsten Byte fortgesetzt. Dieses Verfahren stellt die statistische Gleichverteilung der möglichen Änderungswerte sicher.

### zum Beispiel:

| | |
|---|---|
| Alphabetlänge: | 26 Zeichen ("A ... Z") |
| Bit-Maske: | 31 (dez) bzw. 1F (hex) bzw. 00011111 (bin) gemäß Tabelle 4 gewählt |

Vorgehensweise: man nehme Byte 1 und verknüpfe dieses binär "und" mit der Maske. Das Resultat ist ein Wert zwischen 0 und 31. Wenn der erhaltene Wert echt kleiner als die Alphabetgröße ist, entspricht wird dieser als Änderungswert festgesetzt. Im unten gezeigten Beispiel wären dies 11 Schritte (aus Byte 3).

**Tabelle 3: Vorgehensweise zur Ermittlung eines Anderungswertes anhand eines 26-elementigen Zeichensatzes**

| | | Byte 1 | Byte 2 | Byte 3 | Byte 4 | Byte 5 | Byte 6 | ... |
|---|---|---|---|---|---|---|---|---|
| binär: | String BS | 10**111110** | 110**11010** | 101**10111** | 010**00110** | 101**01011** | 001**11001** | ... |
| dezimal: | String BS | 190 | 218 | 171 | 86 | 167 | 57 | ... |
| binär: | Maske M | 00011111 | 00011111 | 00011111 | 00011111 | 00011111 | 00011111 | ... |
| binär: | M **AND** BS | 000**11110** | 000**11010** | 000**10111** | 000**00110** | 000**01011** | 000**11001** | ... |
| dezimal: | M **AND** BS | 30 | 26 | **23** | 6 | 11 | 25 | ... |
| | | | | | | | | |
| | | | | | | | | |

Hierdurch kann sichergestellt werden, dass die Wahrscheinlichkeit der Zustände nach der anschließenden Modulo-Addition gleichverteilt sind und somit weder Strukturen noch signifikante Häufigkeitsverteilungen erhalten bleiben.

Bei einer Ausgabelänge von 16 Byte kann es im ungünstigsten Fall (Alphabet mit 129 Zeichen) mit einer Wahrscheinlichkeit von < 1:74.000 vorkommen, dass in den geprüften 16 Byte kein Wert mit der gewünschten Eigenschaft gefunden wurde. In diesem Fall wird der AES über den zuvor gewonnenen Output erneut direkt neu gerechnet (vgl. CFB Mode).

**Tabelle 4: Bitmaske zur Werteeinschränkung der pseudozufälligen Bytes.**

| Bit-Maske | | | Alphabetgröße | | |
|---|---|---|---|---|---|
| hex | bin | dec | in Zeichen | | |
| 01 | 0000 0001 | 1 | 1 | bis | 2 |
| 03 | 0000 0011 | 3 | 3 | bis | 4 |
| 07 | 0000 0111 | 7 | 5 | bis | 8 |
| 0F | 0000 1111 | 15 | 9 | bis | 16 |
| 1F | 0001 1111 | 31 | 17 | bis | 32 |
| 3F | 0011 1111 | 63 | 33 | bis | 64 |
| 7F | 0111 1111 | 127 | 65 | bis | 128 |
| FF | 1111 1111 | 255 | 129 | bis | 256 |

Zwar wird dieser AES-Algorithmus für die Erzeugung des Änderungswertes verwendet; der angesprochene Nachteil der nicht vorhandenen Alphabeterhaltung dieses Algorithmus ist aber für die Erzeugung des Änderungswertes unrelevant.

Für das erste Zeichen 11 der Zeichenkette 10 wird nun ein initiales Eingangswort 8* verwendet, welches vorgegeben ist. Dieses kann beispielsweise innerhalb des Schlüssels abgelegt sein oder kann zusätzlich eingegeben werden. Es ist nur wichtig, dass dieses initiale Eingangswort gemerkt wird und für die Entschlüsselung wieder bereit gestellt wird. Damit allerdings nun eine verbesserte Verschlüsselung der Zeichenkette stattfindet und eine Diffusion erzeugt, wird nun die Erzeugung des Änderungswertes für das Abändern der nachfolgenden Zeichen in Abhängigkeit zum geänderten ersten Zeichen 21 gebracht. Dies kann im vorliegenden Fall so durchgeführt werden, dass das geänderte erste Zeichen "X" verwendet wird und nun in eine vorbestimmte Stelle im Ausgangswort 9 eingesetzt, wodurch das neue Eingangswort 8 entsteht. Das neu entstehende Eingangswort 8 lautet dann "=zXf". Es ist ersichtlich, dass hieraus im Vergleich zum vorigen Ausgangswort, ein vollkommen anderes neues Ausgangswort 9 entsteht. Da es nicht von außen nicht ersichtlich ist, wie die das Eingangswort verändert wird, ist das Resultat der Arbeit der Übergangsfunktion 15 nicht vorhersagbar. Ferner entsteht nun aus der Ansteuereinheit 4 wiederum ein neuer Änderungswert 5, der nicht vorhersagbar ist, aber reproduzierbar ist. Nun erfolgt die Änderung des zweiten Zeichens "B" anhand des neu ermittelten Änderungswertes 5. Anschließend erfolgt die Veränderung des Eingangswortes durch das geänderte nächste Zeichen der Zeichenkette und so weiter, bis sämtliche Zeichen der Zeichenkette 10 abgeändert sind. Dabei wird anhand des zuletzt geänderten Zeichens 21 jedes Mal das zuletzt benutzte Ausgangswort 9 erneut abgeändert, welches dann wiederum das neu zu verwendende Eingangswort 8 darstellt.

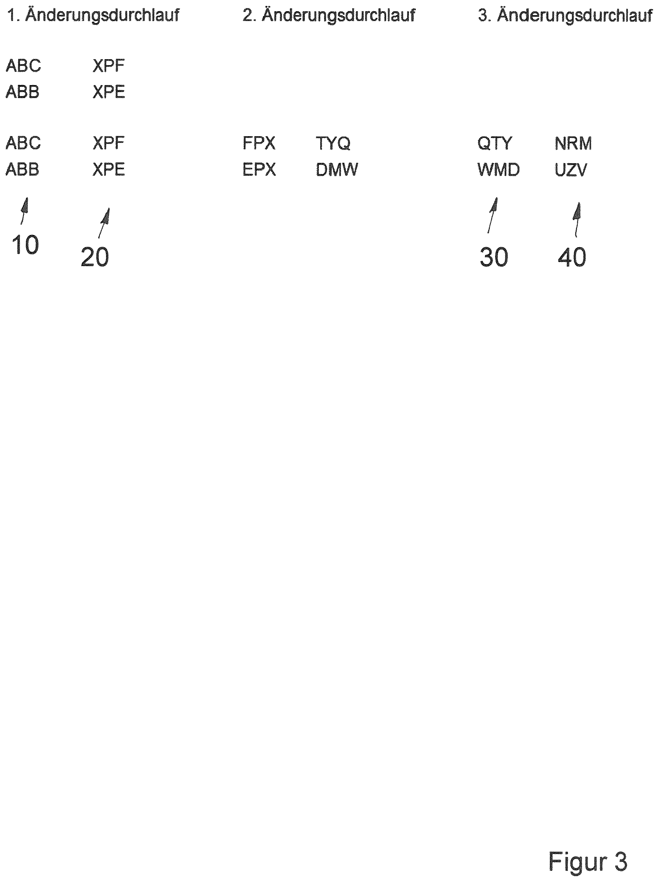

In Figur 3 ist tabellarisch dargestellt, wie die schrittweise Änderung der Zeichenkette 10 erfolgt. In einem ersten Änderungsdurchlauf wird die Zeichenkette "ABC" zunächst zur ersten geänderten Zeichenkette 21 "XPF" abgeändert. Die erste geänderte Zeichenkette 21 kann so bereits eine verschlüsselte Zeichenkette darstellen. Eine Zeile tiefer ist allerdings das Ergebnis angezeigt, wenn eine leicht variierte Zeichenkette "ABB" verschlüsselt werden soll. Anstelle "ABC" soll also die Zeichenkette "ABB" geändert werden. Diese würde nach dem vorliegendem Algorithmus zur ersten geänderten Zeichenkette 21 "XPE" führen. Es ist ersichtlich, dass die beiden ersten Zeichen jeweils der zu ändernden Zeichenkette 10 und der geänderten ersten Zeichenkette 20 stets unverändert bleiben zur vorherigen Zeichenkette "ABC" bzw. "XPF". Dem Attribut der Diffusion ist damit nicht genüge getan, da die Variation in der letzten Ziffer der ursprünglichen Zeichenkette sich auch nur in einer Variation des letzten Zeichens in der geänderten Zeichenkette 20 wiederspiegelt. Um dies zu verbessern wird nun ein zweiter Änderungsdurchlauf durchgeführt. Basis hierfür bildet die erste geänderte Zeichenkette 20, wobei diese allerdings in umgekehrter Reihenfolge durchlaufen und erneut verändert wird. Die Änderung erfolgt im wesentlichen identisch zu der vorstehend genannten Verfahrensweise. Allerdings wird zunächst die Zeichenkette 20 umgedreht. Aus der Zeichenkette "XPF" wird nun die Zeichenkette "FPX" erzeugt. Nach dem zweiten Änderungsdurchlauf lautet die geänderte Zeichenkette "TYQ". Wird diese wiederum in ihre korrekte Richtung umgedreht, entsteht die zweite geänderte Zeichenkette 30, die folglich "QTY" lautet. Würde entsprechend ein zweiter Änderungsdurchlauf auch für die variierte Zeichenkette "ABB" vollzogen werden, würde die zweite geänderte Zeichenkette 30 "WMD" lauten. Es ist ersichtlich, dass die kleine Änderung an der letzten Stelle der ursprünglichen Zeichenkette 10 sich nun auch auf die ersten beiden Stellen der zweiten geänderten Zeichenkette 30 auswirkt. Insofern ist durch dieses nochmalige Durchlaufen in umgekehrter Reihenfolge ein hohes Maß an Diffusion erzeugt worden, welche sich nun in beide Richtungen innerhalb der Zeichenkette ausbreiten kann und somit die Sicherheit dieses Algorithmus drastisch erhöht.

Ferner kann ein dritter Änderungsdurchlauf vorgenommen werden, worin die zweite geänderte Zeichenkette 30 "QTY" nochmals nach der vorbeschriebenen Art und Weise geändert wird, wodurch eine dritte geänderte Zeichenkette 40 "NRM" entsteht. Auch diese bleibt natürlich vollkommen unterschiedlich zu der 3. geänderten Zeichenkette 40 "UZV", die auf der variierten ursprünglichen Zeichenkette "ABB" basieren würde.

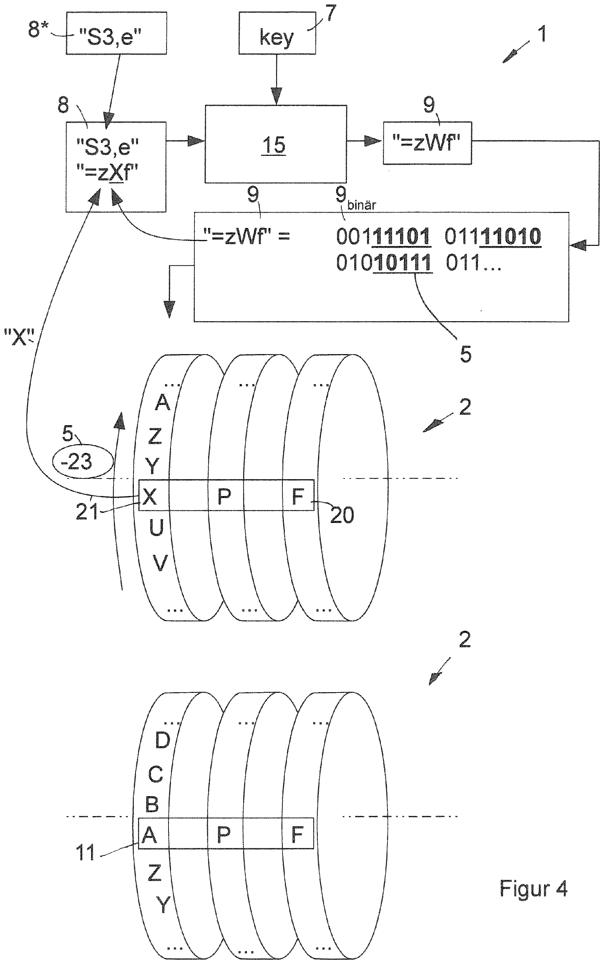

In Figur 4 wird nun die Dechiffrierung beispielhaft anhand der Rückveränderung aus der ersten geänderten Zeichenkette 20 in die ursprüngliche Zeichenkette 10 dargestellt. Diese Art der Rückübertragung muss natürlich für jede der Änderungsdurchläufe gleichermaßen durchlaufen werden. Es ist dabei zu berücksichtigen, dass bei der Dechiffrierung zuerst der letzte Änderungsdurchlauf rückabgewickelt wird. Die Änderungsdurchläufe werden also bezogen auf die Verschlüsselung in umgekehrter Reihenfolge durchgeführt. Innerhalb eines Änderungsdurchlaufs erfolgt allerdings das "Zurückändern" der jeweiligen geänderten Zeichen in die ursprünglichen Zeichen in der selben Reichenfolge, wie beim Verschlüsseln. Es ist die Walzenanordnung 2 gezeigt mit der ersten geänderten Zeichenkette "XPF". Aufgrund des initialen Ausgangswortes 8* wird analog zur Verschlüsselung zunächst der Änderungswert 5 auf "23" festgesetzt. Anstelle einer Aufaddierung folgt allerdings nun eine Subtraktion der Ordnungszahl 13 des geänderten Zeichens 21 "X" welches dann wiederum zur Ordnungszahl 0 führt, die dem Buchstaben A zugewiesen ist. Für die Änderung des Eingangswortes 8 wird dann allerdings nicht der nun geänderte Zustand verwendet, also das A; vielmehr wird das vor der Rückänderung vorhandene Zeichen, also im vorliegenden Falls das "X" für die Änderung des Eingangswortes verwendet. So bleibt sichergestellt, dass auch die Änderungen die Eingangsworte sowohl bei der Verschlüsselung als auch bei der Entschlüsselung identisch geändert werden. Der "quasi Zufallsgenerator", also die Übergangsfunktion bzw. die kryptografische Einheit 15, wird also mit den selben Eingangsworten 8 "gefüttert", so dass im Laufe des Änderungsdurchlaufes stets die selben Änderungswerte erzeugt werden wie beim Verschlüsseln. Der einzige Unterschied ist, dass die Änderungswerte nun nicht mehr aufaddiert sondern subtrahiert werden von den Ordnungszahlen 13 der geänderten Zeichen 21.

### Bezugszeichenliste

- 1: Anordnung
- 2: Speicher
- 3: Speichereinheit
- 4: Ansteuereinheit
- 5: Änderungswert
- 6: Anfangszustand
- 7: Schlüssel
- 8: Eingangswort
- 9: Ausgangswort
- 10: ursprüngliche Zeichenkette
- 11: ursprüngliches Zeichen
- 12: Zeichensatz (ASCII-Codierung)
- 13: Ordnungszahl (= Bitmuster aus ASCII-Codierung)
- 15: kryptografische Einheit
- 20: erste verschlüsselte Zeichenkette
- 21: erste geänderte Zeichen
- 30: zweite verschlüsselte Zeichenkette

## Patentansprüche

1. Verfahren zur Verschlüsselung, insbesondere Pseudonymisierung von Zeichenketten,
wobei eine ursprüngliche Zeichenkette (10) eine Reihe von ursprünglichen Zeichen (11) umfasst,
wobei anhand des Verfahrens die ursprüngliche Zeichenkette (10) in eine verschlüsselte Zeichenkette (20) überführt wird, die gegenüber der ursprünglichen Zeichenkette (10) eine Reihe von geänderten Zeichen (21) umfasst,
wobei jedes ursprüngliche Zeichen (11) Bestandteil eines definierten Zeichensatzes (12) ist, wobei jedem Zeichen (11, 21) eine eindeutige fortlaufende Ordnungszahl (13) zugewiesen ist, und wobei jedes ursprüngliche Zeichen (11) in ein geändertes Zeichen (21) überführt wird, welches Bestandteil des selben definierten Zeichensatzes (12) des ursprünglichen Zeichens (11) ist,
wobei in einem ersten Änderungsdurchlauf nacheinander, insbesondere alle, ursprünglichen Zeichen (11) der ursprünglichen Zeichenkette (10) in erste geänderte Zeichen (21) geändert werden, wobei die geänderten Zeichen (21) zusammen eine verschlüsselte Zeichenkette (20) bilden,
wobei in einem zweiten Änderungsdurchlauf, insbesondere alle, ersten geänderten Zeichen (21) in geänderter Reihenfolge in zweite geänderte Zeichen geändert werden, wobei die zweiten geänderten Zeichen zusammen eine zweite verschlüsselte Zeichenkette (30) bilden,
wobei jeder Änderungsumlauf umfasst:
Vorgegeben eines Änderungswertes (5), der auf die Ordnungszahl (13), des zu ändernden Zeichens (12) aufaddiert wird,
wobei:
Abändern dieses Zeichens in dasjenige Zeichen des Zeichensatzes (12) in seinem Alphabet, dessen Ordnungszahl (13) dem Additionsergebnis entspricht, anschließend Erstellen eines neuen Änderungswertes (5) für die Änderung des nächsten zu ändernden Zeichens, wobei der Änderungswert (5) für jedes Zeichen (11) neu festgelegt wird anhand eines Ausgangswortes (9), das von einer kryptografischen Einheit (15) erzeugt wird, wobei die kryptografische Einheit das Ausgangswort (9) in Abhängigkeit eines zuvor veränderten, insbesondere des unmittelbar zuvor veränderten Zeichens, erzeugt, und
wobei die kryptografische Einheit einen AES-Algorithmus ausführt, um das Ausgangswort zu erzeugen.

2. Verfahren nach dem vorherigen Anspruch,
**dadurch gekennzeichnet,**
**dass** das erste Zeichen, das im zweiten Änderungsdurchlauf zuerst geändert wird, nicht an derselben Position der Zeichenkette ist, die auch im ersten Durchlauf zuerst geändert wurde.

3. Verfahren nach einem der vorherigen Ansprüche,
**dadurch gekennzeichnet,**
**dass** im zweiten Änderungsdurchlauf die ersten geänderten Zeichen in umgekehrter Reihenfolge, bezogen auf den ersten Änderungsdurchlauf, geändert werden.

4. Verfahren nach einem der vorherigen Ansprüche,
**dadurch gekennzeichnet,**
**dass** in einem dritten Änderungsdurchlauf, insbesondere alle, zweiten geänderten Zeichen in der selben Reihenfolge wie im ersten Änderungsdurchlauf Reihenfolge in dritte geänderte Zeichen geändert werden, wobei die dritten geänderten Zeichen zusammen eine dritte verschlüsselte Zeichenkette (40) bilden.

5. Verfahren nach einem der vorherigen Ansprüche,
**dadurch gekennzeichnet,**
**dass** das Ergebnis einer Zeichenänderung Eingang findet in die Erzeugung eines Änderungswertes für eine nachfolgende Zeichenänderung.

6. Verfahren zur Pseudonymisierung eines Datenfeldes einer Datenbank, umfassend die folgenden Verfahrensschritte:
Auslesen des Inhalts des Datenfeldes,
Verschlüsseln des Inhalts des Datenfeldes nach einem der vorherigen Ansprüche,
Ersetzen des Inhalts des ausgelesenen Datenfeldes durch den verschlüsselten Inhalt.

7. Vorrichtung zur Durchführung des Verfahrens nach einem der vorherigen Ansprüche, wobei die Vorrichtung weiterhin beinhaltet:
- einen Speicher (2) mit einer Anzahl von Speichereinheiten (3), wobei pro Speichereinheit (3) ein Zeichen (11) der Zeichenkette (10) abgelegt ist,
- eine Ansteuereinheit (4) zum gezielten Ändern eines der Zeichen (11), welches in einer der Speichereinheiten (3) abgelegt ist in Abhängigkeit eines Änderungswertes,
- eine Anordnung (15, 4) zur Erzeugung des Änderungswertes (5) mit einer kryptografischen Einheit (15), mit der der Änderungswert (5) mittels eines Schlüssels (7) erzeugt wird,
- eine Datenverbindung zwischen der Speichereinheit (2) und der kryptografischen Einheit (15) zur Übertragung einer Information eines geänderten Zeichens (21) an die Anordnung (15, 4) zur Erzeugung des Änderungswertes.

## Claims

1. Method for pseudonymizing, in particular, pseudonymizing character strings,
wherein an original character string (10) comprises a series of original characters (11),
wherein, based on the method, the original character string (10) is converted into an encrypted character string (20), which comprises a series of characters (21) that have been altered with relation to the original character string (10),
wherein each original character (11) is an integral part of a defined character set (12), wherein a clear consecutive ordinal number (13) is assigned to each character (11, 21), and wherein each original character (11) is converted into an altered character, which is an integral part of the same defined character set (12) of the original character (11),
wherein, in a first alteration pass sequentially, in particular, all original characters (11) of the original character string (10) are changed into the altered characters (21), wherein the altered characters (21) together form an encrypted character string (20),
wherein, in a second alteration pass, in particular, all first altered characters (21) are changed in an altered sequence into second altered characters, wherein the second altered characters together form a second encrypted character string (30),
wherein each alteration pass comprises:
specifying an alteration value (5), which is added to the ordinal number (13) of the character (12) to be altered,
wherein:
changing this character into the character of the character set (12) in its alphabet whose ordinal number (13) corresponds to the sum, then creating a new alteration value (5) for the change of the next character to be altered, wherein the alteration value (5) for each character (11) is redefined on the basis of an output word (9) generated by a cryptographic unit (15), wherein the cryptographic unit generates the output word (9) depending on a previously altered character, in particular, the character immediately change beforehand, and
wherein the cryptographic unit executes an AES algorithm to generate the output word.

2. Method according to the preceding claim,
**characterized in that**
that the first character, which is initially altered in the second alteration pass, is not on the same position of the character string, which was also initially altered in the first pass.

3. Method according to one of the preceding claims,
**characterized in that**
that, during the second alteration pass, the first altered characters are changed in reverse order with reference to the first alteration pass,

4. Method according to one of the preceding claims,
**characterized in that**
that, in a third alteration pass, in particular, all second altered characters in the same sequence as in the sequence in the first alteration pass are changed into third altered characters, wherein the third altered characters together form a third encrypted character sting (40).

5. Method according to one of the preceding claims,
**characterized in that**
that the result of a character alteration would be introduced into the generation of an alteration value for a subsequent character alteration.

6. Method for pseudonymizing a data field of a database, comprising the following method steps:
reading the contents of the data field,
encryption of the contents of the data field device according to any one of the preceding claims,
replacing the contents of the read data field with the encrypted content.

7. Apparatus for carrying out the method according to one of the preceding claims, wherein the apparatus furthermore contains:
- a memory (2) with a quantity of memory units (3), wherein one character (11) of the character string (10) is stored per memory unit (3),
- a control unit (4) for specifically altering one of the characters (11), which is stored in one of the memory units (3) depending on an alteration value,
- an arrangement (15, 4) to generating the alteration value (5) with a cryptographic unit (15), with which the alteration value (5) is generated by means of a key (7),
- a data connection between the memory unit (2) and the cryptographic unit (15) for transmitting information of an altered character (21) to the arrangement (15, 4) for generating the alteration value.

## Revendications

1. Procédé de codage, en particulier de pseudonymisation de chaînes de signes,
sachant qu'une chaîne de signes originale (10) comprend une série de signes originaux (11),
sachant qu'à l'aide du procédé, la chaîne de signes originale (10) est convertie en une chaîne de signes codée (20), qui comprend une série de signes modifiés (21) par rapport à la chaîne de signes originale (10),
sachant que chaque signe original (11) est un composant d'un jeu de signes défini (12), sachant qu'un nombre ordinal suivi précis (13) est attribué à chaque signe (11, 21) et sachant que chaque signe original (11) est converti en un signe modifié (21), lequel est un composant du même jeu de signes défini (12) du signe original (11),
sachant que dans un premier passage de modification, en particulier tous les signes originaux (11) de la chaîne de signes originale (10) sont modifiés en premiers signes modifiés (21), sachant que les signes modifiés (21) forment ensemble une chaîne de signes codée (20),
sachant que dans un deuxième passage de modification, en particulier tous les premiers signes modifiées (21) sont modifiés dans un ordre modifié en deuxièmes signes modifiés, sachant que les deuxièmes signes modifiés forment ensemble une deuxième chaîne de signes codée (30),
sachant que chaque passage de modification comprend :
l'affectation d'une valeur de modification (5), qui est additionnée au nombre ordinal (13) du signe à modifier (12),
sachant que :
la modification de ce signe en signe du jeu de signes (12) dans son alphabet, dont le nombre ordinal (13) correspond au résultat de l'addition, ensuite, élaboration d'une nouvelle valeur de modification (5) pour la modification du signe suivant à modifier, sachant que la valeur de modification (5) pour chaque signe (11) est à nouveau définie à l'aide d'un mot de sortie (9), qui est généré par une unité cryptographique (15), sachant que l'unité cryptographique génère le mot de sortie (9) en fonction d'un signe préalablement modifié, en particulier modifié directement avant et
sachant que l'unité cryptographique exécute un algorithme AES pour générer le mot de sortie.

2. Procédé selon la revendication précédente,
**caractérisé en ce que**
le premier signe, qui est d'abord modifié dans le deuxième passage de modification, n'est pas dans la même position de la chaîne de signes, qui a d'abord été également modifiée dans le premier passage.

3. Procédé selon l'une quelconque des revendications précédentes,
**caractérisé en ce que**
dans le deuxième passage de modification, les premiers signes modifiés sont modifiés dans l'ordre inverse, en référence au premier passage de modification.

4. Procédé selon la revendication précédente,
**caractérisé en ce que**
dans un troisième passage de modification, en particulier tous les deuxièmes signes modifiés dans la même suite sont modifiés en troisièmes signes modifiés comme dans le premier passage de modification, sachant que les troisièmes signes modifiés forment ensemble une troisième chaîne de signes codée (40).

5. Procédé selon l'une quelconque des revendications précédentes,
**caractérisé en ce que**
le résultat d'une modification de signe trouve place dans la génération d'une valeur de modification pour une modification de signe suivante.

6. Procédé de pseudonymisation d'une zone de données d'une banque de données, comprenant les étapes de procédé suivantes :
lecture du contenu de la zone de données,
codage du contenu de la zone de données selon l'une quelconque des revendications précédentes,
remplacement du contenu de la zone de données lue par le contenu codé.

7. Dispositif destiné à exécuter le procédé selon l'une quelconque des revendications précédentes, sachant que le dispositif contient en plus :
- une mémoire (2) avec un nombre d'unités de mémoire (3), sachant qu'un signe (11) de la chaîne de signes (10) est déposé en mémoire par unité de mémoire (3),
- une unité de commande (4) pour la modification précise d'un des signes (11), lequel est déposé en mémoire dans une des unités de mémoire (3) en fonction d'une valeur de modification,
- un système (15, 4) destiné à générer la valeur de modification (5) avec une unité cryptographique (15) avec laquelle la valeur de modification (5) est générée au moyen d'un code (7),
- une liaison de données entre l'unité de mémoire (2) et l'unité cryptographique (15) pour la transmission d'une information d'un signe modifié (21) au système (15, 4) pour générer la valeur de modification.
